# EUROPÄISCHE PATENTSCHRIFT

(11) **EP 3 576 990 B1**
(45) Veröffentlichungstag und Bekanntmachung des Hinweises auf die Patenterteilung: **13.01.2021**
(21) Anmeldenummer: 17778178.8
(22) Anmeldetag: 15.09.2017
(51) Int. Cl.: B60R 21/013

(54) **VERFAHREN ZUM BETRIEB EINES KRAFTFAHRZEUGS MIT EINEM INSASSENSCHUTZSYSTEM SOWIE KOMFORTKOMPONENTEN**
METHOD FOR OPERATING A MOTOR VEHICLE COMPRISING AN OCCUPANT PROTECTION SYSTEM AND COMFORT COMPONENTS
PROCÉDÉ POUR FAIRE FONCTIONNER UN VÉHICULE AUTOMOBILE AVEC UN SYSTÈME DE PROTECTION DES OCCUPANTS AINSI QUE DES ÉLÉMENTS DE CONFORT

(30) Priorität: 02.02.2017 DE 102017201649
(43) Veröffentlichungstag der Anmeldung: 11.12.2019
(73) Patentinhaber: Continental Automotive GmbH, 30165 Hannover (DE)
(72) Erfinder: FERNKORN, Georg, 37351 Dingelstädt (DE); BODENHEIMER, Robert, 65510 Idstein (DE); LINKENBACH, Steffen, 65760 Eschborn (DE); RINK, Klaus, 63517 Rodenbach (DE)
(74) Vertreter: Büchner, Jörg
(86) Internationale Anmeldenummer: PCT/DE2017/200094
(87) Internationale Veröffentlichungsnummer: WO 2018/141320

(56) Entgegenhaltungen:
- WO-A1-2006/045826
- DE-A1- 10 103 401
- DE-A1- 10 346 735
- DE-A1-102010 028 837
- DE-A1-102011 055 685
- DE-A1-102012 105 285

## Beschreibung

Die Erfindung betrifft ein Verfahren zum Betrieb eines Kraftfahrzeugs mit einem Insassenschutzsystem sowie Komfortkomponenten gemäß dem Oberbegriff von Anspruch 1.

Dabei sind Insassenschutzsysteme bekannt, welche in Abhängigkeit der erkannten Situation, insbesondere Gefahrensituation, angepasst wird. Dazu wird mit zumindest einem Insassenerfassungsmittel die Insassensituation erkannt, um also bspw. auf die aktuelle Sitzbelegung und/oder Sitzhaltung des Insassen reagieren und insbesondere die Auslösung von Insassenschutzsystemen entsprechend anpassen zu können.

Zudem werden zunehmend Umfelderfassungsmittel zum Erkennen der Umfeldsituation verwendet und bspw. in Abhängigkeit von diesen bei als höchstwahrscheinlich unvermeidbar klassifizierten Unfällen bereits erste Insassenschutzsysteme, insbesondere reversible Gurtstrammer usw. vor dem eigentlichen Aufprall ausgelöst als auch die Auslösung weiterer Insassenschutzsysteme vorbereitet, indem die Systeme aktiviert und Auslöseschwellen angepasst werden.

Darüber hinaus werden Fahrzustandserfassungsmittel zum Erkennen der Fahrzustandssituation, also Daten von eigenen Fahrzeug, insbesondere die Eigengeschwindigkeit, Beschleunigung, evtl. Bremseingriffe, Straßenverlauf ect. berücksichtigt, und/oder auch Daten von anderen Verkehrsteilnehmern oder Verkehrsinfrastrukturelementen bzw. weitere externe Datenprovider (z.B. Verkehrsdatensserver, OEM-Backend, etc.). Durch die Entwicklung von Kommunikationsmöglichkeiten zwischen Fahrzeugen (Car-To-Car, kurz C2C bzw. vehicle-to-vehicle, V2V) als auch zu bzw. mit stationären Infrastrukturelementen (Car-To-Infrastructure, kurz C2I bzw. vehicle-to-infrastructure, V2I), verallgemeinert auch Car-To-X-Technologie genannt, werden darüber hinaus Positionsdaten sowie weitere Eigenschaften anderer Verkehrsteilnehmer, Verkehrseinschränkungen oder Warnungen über Bremsvorgänge, Hindernisse oder dergleichen über den Erfassungsbereich der eigenen Umfeldsensoren hinaus verfügbar.

Beispielsweise offenbart die DE 103 46 735 A1 ein Verfahren zur Einschränkung von Komfortfunktionen für einen Fahrer in einem Kraftfahrzeug, wobei abhängig vom Erkennen einer Gefahrensituation eine solche Einschränkung ausgelöst wird. Dabei basiert das Erkennen einer Gefahrensituation auf Signalen von Insassen-, Umfeld- und Fahrzustandserfassungsmitteln. Als Beispiele für eine Gefahrensituation sind u.a. aufgeführt ein Unterschreiten eines vorgegebenen Aufmerksamkeitsgrades, eine hohe Verkehrsdichte, ein Unterschreiten eines vorgegebenen Mindestabstandes, ein Überschreiten einer vorgegebenen Fahrzeuggeschwindigkeit und ein Ausfall eines Fahrzeugsystems wie ABS. Abhängig vom Erkennen einer Gefahrensituation werden beispielsweise eine Zieleingabe im Navigationsgerät, eine Telefonwahl, eine Durchleitung ankommender Telefonanrufe und/oder eine Bedienung des Radios verhindert oder eingeschränkt.

Die DE 101 03 401 A1 beschreibt ein System zur Gefahrenabwendung für einen Fahrer eines Fahrzeugs mit Einrichtungen zur Erfassung von Fahrzustandsgrößen, Umgebungsdaten und der Fahreraktivität sowie zur Identifikation des Fahrers. Aus den Fahrzustandsgrößen, den Umgebungsdaten und den Daten über die Aktivität des Fahrers wird eine auf den Fahrer individuell bezogene Fahrerbelastung abgeleitet, welche zur Anpassung einer Steuerstrategie zur Ansteuerung einer Sicherheitseinrichtung herangezogen wird. Damit soll ein die individuelle Belastung eines Fahrers berücksichtigendes Gefahrenabwendungssystem bereitgestellt werden.

In der WO 2006/045826 A1 ist ein Verfahren zur Erhöhung der Fahrsicherheit und des Komforts eines Kraftfahrzeugs beschrieben, wobei basierend auf Daten eines Fahrzeugsteuergeräts und eines Navigationssystems sowie auf Informationen über den aktuellen Fahrzustand ein aktueller Gefahrenwert ermittelt wird. In Abhängigkeit des Gefahrenwerts wird bspw. ein Bremssystem vorbereitet oder ein automatisierter Bremseneingriff ausgeführt.

Die DE 10 2011 055 685 A1 beschreibt ein Verfahren zum Betrieb eines ein Fahrverhalten eines Fahrzeugs beeinflussenden Systems, wobei eine automatische Einstellung einer durch einen Fahrzeuginsassen manuell einstellbaren Steuerungsgröße des Systems erfolgt. Dabei wird eine Information erfasst, welche eine jeweilige Fahrsituation zum Zeitpunkt der manuellen Einstellung charakterisiert, um bei Vorliegen einer identischen Fahrsituation die entsprechende Einstellung automatisch durchzuführen. Bei der Information, die eine solche Fahrsituation charakterisiert und die mittels bspw. Kamera, Ultraschall, Radar, Lidar und/oder Navigationseinrichtung erfasst wird, kann es sich bspw. um die Position des Fahrzeugs, die Straßenart, die Verkehrssituation und/oder die Anzahl der Fahrzeuginsassen handeln. Bei der automatisch eingestellten Steuerungsgröße kann es sich bspw. um einen Schwellwert für eine Warn-, Hinweis-, und Eingriffsfunktion, einen Schwellwert eines Fahrzeugstabilitätssystems, eine Sitzeinstellung und/oder eine das Bremsverhalten beeinflussende Größe handeln.

Die DE 10 2012 105 285 A1 offenbart ein Verfahren zum Assistieren eines Fahrers eines Kraftfahrzeugs, wobei eine Vorhersage eines Fahrmanövers auf Basis verschiedener ermittelter und vorgegebener Größen abgeleitet wird. Basierend auf dem abgeleiteten Fahrmanöver wird ein Fahrerassistenzsystem angepasst. Bei den entsprechenden Größen kann es sich Daten betreffend den Fahrer sowie die Umgebung und den Fahrzustand des Kraftfahrzeugs handeln. Abhängig von dem daraus abgeleiteten, vorhergesagten Fahrmanöver wird bspw. eine Notbremsung oder ein Lenkeingriff eingeleitet oder es wird ein Blinker aktiviert.

In der DE 10 2010 028 837 A1 ist ein Verfahren zur Anpassung eines Fahrerassistenzsystems eines Fahrzeugs an die aktuelle Fahrsituation beschrieben, wobei basierend auf Informationen zum Umfeld und zum Fahrzustand eine Gefährdungseinschätzung der Fahrsituation abgeleitet wird, und wobei abhängig von der entsprechenden Bewertung eine Anpassung eines Fahrerassistenzsystems erfolgt.

Aktuell sind Sicherheitssysteme für die passive Sicherheit von Insassen jedoch in der Regel lediglich für starren Innenraumanordnungen ausgelegt. Der Fahrer muss permanent das Maximum an Sicherheitsvorrichtungen (Sicherheitsgurt, stabile Sitzposition, Ausrichtung, etc...) nutzen.

Dies ist notwendig, da bisher keine gesamtheitliche Gefahrenbewertung - weder für das Fahrzeuginnere, noch für seine Umgebung - stattfindet.

Die Aufgabe der vorliegenden Erfindung ist es, die Sicherheit und den Komfort im Straßenverkehr weiter zu erhöhen. Diese Aufgabe wird durch die Merkmale der unabhängigen Ansprüche gelöst. Vorteilhafte Weiterbildungen der Erfindung ergeben sich aus den Unteransprüchen, wobei auch Kombinationen und Weiterbildungen einzelner Merkmale miteinander denkbar sind.

Ein wesentlicher Gedanke der Erfindung besteht darin, dass durch eine gesamtheitliche Gefahrenbewertung durch sowohl externe, also außerhalb des Fahrzeugs liegende Parameter als auch interne, also im Fahrzeug liegende Parameter eine Gesamtbewertung bzw. Ausgleich denkbar ist.

So sollen aus zumindest einem Teil der Signale der Umfelderfassungsmittel, wie Radar, Kamera oder Lidarsysteme, und Fahrzustandserfassungsmittel einerseits anhand von vorgegebenen Bedingungen eine aus mehreren vorgegebenen externen Schutz- bzw. Gefahrenklassen abgeleitet werden.

Die Begriffe Schutz- bzw. Gefahrenklasse sind dabei funktional für das Konzept gleichwertig, jedoch natürlich gerade invers zueinander, d.h. entspricht eine niedrige Schutzklasse einer hohen Gefahrenklasse und umgekehrt und wird im Folgenden das Konzept anhand von Schutzklassen erläutert, aber natürlich unmittelbar auf die inverse Gefahrenklasse adaptierbar.

Es sind sowohl für den internen Bereich als auch den externen Bereich eine Anzahl von Schutz- bzw. Gefahrenklassen, vorzugsweise zumindest drei (niedrig, mittel, hoch), besser aber noch weitere individuellere Klassen vorgesehen. Für jede der Klassen sind entsprechende Bedingungen vorgegeben, anhand denen das Fahrzeug, insbesondere ein entsprechendes Steuergerät, bspw. das Steuergerät des Insassenschutzsystems die jeweilige Klasse selbsttätig, also automatisch bspw. anhand von einer ggfs. auch unscharfen, bspw. auf Gewichten oder Fuzzy-Logik oder Lernalgorithmen basierenden Logik ableitet.

Zudem wird auch aus zumindest einem Teil der Signale der Insassenerfassungsmittel und Fahrzustandserfassungsmittel andererseits anhand von vorgegebenen Bedingungen eine aus mehreren vorgegebenen internen Schutz- bzw. Gefahrenklassen abgeleitet.

Nun wird im Sinne eines ganzheitlichen Ansatzes der Betrieb des Kraftfahrzeugs anhand der aktuellen internen als auch externen Schutz- bzw. Gefahrenklasse so angepasst, dass ein vorgegebenes Gesamtmaß aus internen Schutz- bzw. Gefahrenklasse und externer Schutz- bzw. Gefahrenklasse eingehalten wird.

Die Grundidee ist also eine Klassifizierung sowohl der internen als auch externen Sicherheit eines Fahrzeuges. Diese beiden Bewertungen bilden gemeinsam einen Gesamtsicherheitsindex. Dies stellt ein neues Verständnis der integralen Sicherheit dar und ermöglicht die adaptive Anpassung einer der beiden Schutzklassen (intern bzw. extern) auf eine Veränderung der jeweils anderen Schutzklasse (intern bzw. extern).

Dabei umfasst die interne Schutzklasse alle passiven Sicherheitssysteme (Sicherheitsgurt, Airbag, etc.). Die externe Schutzklasse beschreibt die potentiellen Gefahren im Umfeld des Fahrzeuges. Die Informationen für die entsprechenden Klassifikationen (intern bzw. extern) können über aktuelle und zukünftige Sensoren und Kommunikationssysteme erhoben werden (z.B. ADAS Sensorik, Innenraumüberwachung, V2X Kommunikation, Mobilfunk, etc.).

Die Detektion eines besonders sicheren Zustandes, respektive hoher Schutzklasse, (intern bzw. extern) ermöglicht höhere Freiheitsgrade der komplementären Schutzklasse (intern bzw. extern). Die reagierende Schutzklasse kann in diesem Fall auch geringere Sicherheitsstufen tolerieren und ermöglicht somit mehr zulässige Zustände. Der Grund dafür ist die ganzheitliche Betrachtung der Insassensicherheit (intern) und die Vernetzung mit der Fahrzeugsicherheit (extern).

Das Degradieren einer, also bspw. internen Schutzklasse führt zu erhöhten Anforderungen der komplementären, also bspw. externen Schutzklasse, verbunden mit einer entsprechenden Hochstufung. Die reagierende Sicherheitsklasse muss in diesem Fall eine höhere Sicherheitsstufe erreichen bzw. annehmen um das Gesamtsicherheitsmaß (integrale Sicherheit) beizubehalten.

Es wird also bei Vorliegen einer hohen externen Schutzklasse bzw. niedrigen Gefahrenklasse eine entsprechende geringere interne Schutzklasse bzw. höhere Gefahrenklasse zugelassen, insbesondere die Benutzung bestimmter Komfortfunktionen und/oder Freiheitsgrade zugelassen.

In die externe Schutz- bzw. Gefahrenklasse geht in einem Ausführungsbeispiel zumindest einer, vorzugsweise mehrere der folgenden Parameter ein:
- Abstand, Geschwindigkeit und Richtung anderer Verkehrsteilnehmer
- Straßenzustand und Witterungssituation
- Verkehrsinformation durch andere Fahrzeuge und /oder Verkehrs-Infrastruktureinrichtungen
- Dynamikinformationen anderer Verkehrsteilnehmer (z.B. Bremsung, Lenkeingriff, Aktivität von Assistenz- oder Komfortfunktionen oder beides, ...)
- Aktualität der Verkehrs- und Streckendaten (inkl. hochaktuell und Live-Daten)
- Bauliche Trennung zum Gegenverkehr
- Bewertung der eigenen Sensordatengüte (Sichtweite, Witterung, Blendung/Sonnenstand, etc.)
- Anzahl an (vertrauenswürdigen) externen Datengebern im weiteren Streckenverlauf.

In die interne Schutz- bzw. Gefahrenklasse geht in einem Ausführungsbeispiel zumindest einer, vorzugsweise mehrere zumindest einer der folgenden Parameter ein:
- Sitzbelegung und Sitzposition
- Zustand der Rückhaltesysteme (z.B. Anschnallgurt, d.h. ob Insasse angeschnallt ist)
- Benutzung von Komfortfunktionen
- eigener Fahrzeugzustand und mögliche Fehlfunktionen des Systems
- eigene Dynamikinformationen (z.B. Bremsung, Lenkeingriff, Aktivität von Assistenzfunktionen, ...)
- Informationen über das Aktivitätslevel und Aufmerksamkeitslevel des Fahrers und ggf. der Insassen
- Aktivität von Peripheriesystemen (insbesondere audio-visuell) welche ggf. die Aufmerksamkeit des Fahrers beeinflussen können (PC, Smartphone, ...)
- Befindlichkeit von beweglichen Gegenständen im Fahrzeuginnenraum wie z.B. ungesicherte Ladungen, Objekte auf den Sitzen etc.
- Zustand der Insassen (schlafend, abgelenkt, Verkehr beobachtend, etc.)

Diese Aufzählung von Parametern der internen und externen Schutz- bzw. Gefahrenklassen ist nicht abschließend und kann anhand der jeweiligen Verfügbarkeit entsprechender Sensordaten und sonstiger Informationen fahrzeug- als auch verkehrssituationsabhängig angepasst werden.

Gemäß einer bevorzugten Weiterbildung ist bei Verlassen der hohen externen Schutzklasse bzw. niedrigen Gefahrenklasse vorgesehen, dass
a) der Fahrer zum Erreichen einer höheren internen Schutzklasse bzw. niedrigeren Gefahrenklasse aufgefordert oder/und
b) die Benutzung bestimmter Komfortfunktionen und/oder Freiheitsgrade eingeschränkt oder/und
c) eine vorgesehene Maßnahme zum Erreichen einer höheren internen Schutzklasse bzw. niedrigeren Gefahrenklasse automatisch durchgeführt wird.

So kann beispielsweise bei Fahrt auf ebenem Untergrund und bekanntem Straßenverkauf mit geringem Gefahrenpotential und guter Erkennungssicherheit für Umfeldsensoren und ohne andere Verkehrsteilnehmer im kritischen Fahrzeugumfeld und Verfügbarkeit von Verkehrsinformationen durch andere Fahrzeuge und /oder Verkehrsinfrastruktur-Einrichtungen eine hohe externe Schutzklasse bzw. geringe externe Gefahrenklasse angenommen werden. In dieser Situation wird eine niedrige interne Schutzklasse gefordert bzw. hohe Gefahrenklasse erlaubt und die Insassen des Fahrzeugs zumindest einen Sitz im Fahrzeug in eine Komfortposition bringen und/oder Rückhaltesysteme lockern (bis zum Fall des Abschnallens, falls dies im rechtlichen Rahmen liegt) und/oder visuelle Medien aktivieren können.

Bei Verlassen dieser hohen externen Schutzklasse bzw. geringen Gefahrenklasse die Insassen gewarnt und aufgefordert werden, wieder eine höhere interne Schutzklasse bzw. geringere Gefahrenklasse einzunehmen und/oder zumindest Teile der Komfortfunktionen deaktiviert bzw. in einen für eine höhere interne Schutzklasse geeignete Betriebssituation überführt und/oder entsprechende Maßnahmen automatisch durchgeführt werden.

Dieses Verfahren wird vorzugsweise in einem Steuergerät mit einem Speicher implementiert, welcher ein Steuerprogramm zum Durchführen des Verfahrens enthält. Ein solches Steuergerät ermöglicht einem Kraftfahrzeug mit einem Insassenschutzsystem sowie Komfortkomponenten und
mit zumindest einem Insassenerfassungsmittel zum Erkennen der Insassensituation,
mit zumindest einem Umfelderfassungsmittel zum Erkennen der Umfeldsituation und
mit zumindest einem Fahrzustandserfassungsmittel zum Erkennen der Fahrzustandssituation die Durchführung dieses Verfahrens.

Anstelle eines fest installierten und programmierten Steuergeräts kann auch ein vergleichbares, bspw. auch externes Gerät dienen, welches die Plattform für diese Funktion darstellt, also beispielsweise die Auslagerung der Funktion auf Server im Fahrzeug erfolgen, welche entsprechende Kapazitäten vorhalten oder sogar externe Geräte, die mit dem Fahrzeug verbunden sind.

Die Erfindung wird nachfolgend noch anhand von zwei Skizzen erläutert.

Die Skizze 1 zeigt eine vereinfachte Entscheidungsmatrix für eine den zulässigen Funktionsbereich des Fahrzeugs zwischen externen und internen Schutzklassen. Der Grenzbereich ist dabei vorzugsweise fahrzeugspezifisch anpassbar bzw. für jeweils gewünschte Komfortfunktionen unterschiedlich, d.h. manche Komfortfunktionen bei mittlerer interner und externer Schutzklasse noch benutzbar, wie bspw. Radioempfang oder dgl., andere Funktionen, wie eine Sitzverstellung gegen die Fahrtrichtung schon nicht mehr, zumal diese ja auch für die Einstufung der internen Schutzklasse selbst wieder ein Parameter ist.

Die Skizze 2 visualisiert noch etwas die unterschiedlichen Entfernungszonen und davon vorzugsweise auch abhängigen Einflussgewichte der berücksichtigten Parameter der externen Schutzklasse, während in die interne Schutzklasse entsprechend die Parameter eher in Abhängigkeit von anderen Einflussgewichten eingehen.

Die Erfindung wird nachfolgend noch anhand von zwei Ausführungsbeispielen näher erläutert.

### Beispiel 1

Das Fahrzeug befindet sich auf einer gut kontrollierbaren Straße, was bspw. auch unter Berücksichtigung von elektronischen Kartendaten sowie Verkehrs-Infrastruktur-Einheiten erkannt wird. Der Erkennungshorizont der Umfelderfassungsmittel ist sehr hoch. Dadurch existiert ein sehr genaues und zuverlässiges Umfeldmodell mit weitem Horizont.

Auf Grund dieser sehr hohen Fahrzeugsicherheit liegt eine hohe externe Schutzklasse vor und kann den Insassen eine geringere Sicherheitsklasse und damit höhere Freiheitsgrade (Bewegung, Interaktion etc.) angeboten werden.

Ein rein exemplarisches Szenario zur Verdeutlichung ist die Fahrt auf ebenem Untergrund, bei klaren Sichtverhältnissen, optimaler Funktionsweise der Fahrassistenzsysteme und maximaler Informationsverfügbarkeit durch V2X und/oder Mobilfunksysteme. Wird dieser stabile Fahrzustand festgestellt und auch mit hoher Wahrscheinlichkeit berechnet, dass er sich in der nächsten Zeit auf diesem stabilen Niveau hält, so würde dies eine Bewertung als hohe externe Schutzklasse bedeuten. Entsprechend kann eine geringere interne Schutzklasse toleriert werden, was in der Praxis zum Beispiel die Erlaubnis zur Veränderung der Sitzposition und Erhöhung des Freiheitsgrades (z.B. Drehung des Sitzes etc.) der Insassen führen könnte.

### Beispiel 2

Das Fahrzeug befindet sich auf einer schlecht kontrollierbaren Straße. Der Erkennungshorizont eingeschränkt. Dadurch existiert ein ungenaues und unzuverlässiges Umfeldmodell mit kurzem Horizont.

Auf Grund dieser gesunkenen Fahrzeugsicherheit liegt eine niedrige externe Schutzklasse vor und muss die interne Schutzklasse der Insassen erhöht werden. Dies bedeutet ein Zurücknehmen der zulässigen Freiheitsgrade (Bewegung, Interaktion etc.).

Ein rein exemplarisches Szenario zur Verdeutlichung dieses Beispiels ist die Veränderung der o.g. exemplarischen Darstellung von Beispiel 1. Dabei stellt das System fest, dass die externe Schutzklasseneinstufung degradiert werden muss - beispielsweise durch Informationen über Mobilfunk und/oder V2X Kommunikation, dass in beispielsweise 1 km Entfernung eine Gefahrenstelle erreicht wird (z.B. liegen gebliebenes Fahrzeug, lokale schlechte Wetterverhältnisse o.Ä.). Dadurch muss die interne Schutzklasse erhöht werden, um die Insassen optimal schützen zu können. Dies könnte beispielsweise durch eine Aufrechtstellung und Ausrichtung der Sitze geschehen, um die Insassen bereits auf mögliche erhöhte Fahrdynamiken (z.B. Bremsung, Ausweichmanöver o.Ä.) vorzubereiten.

Dadurch kann ein gleicher Grad des Insassenschutzes bei erhöhter Flexibilität der Fahrzeugnutzung erreicht werden, insbesondere neue Innenraumkonzepte, wie bspw. in gegenläufige Sitzposition drehbare Sitze, und/oder neue Interaktionskonzepte zwischen der Insassen realisiert werden, z.B. temporäres lockern der Rückhaltevorrichtungen (bis hin zum Abschnallen, falls dies im rechtlichen Rahmen liegt) während der Fahrt, Drehen des Sitzes, etc., insbesondere auch während des autonomen oder teilautonomen Fahrens des Fahrzeugs.

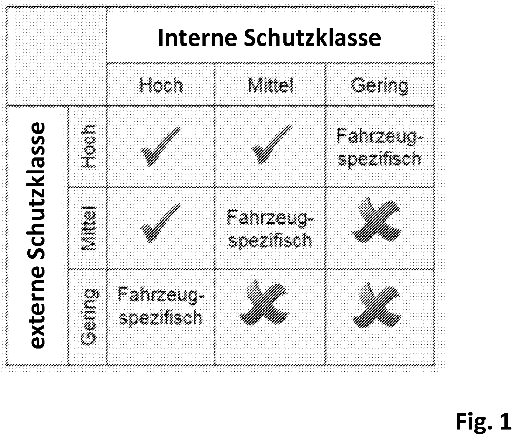

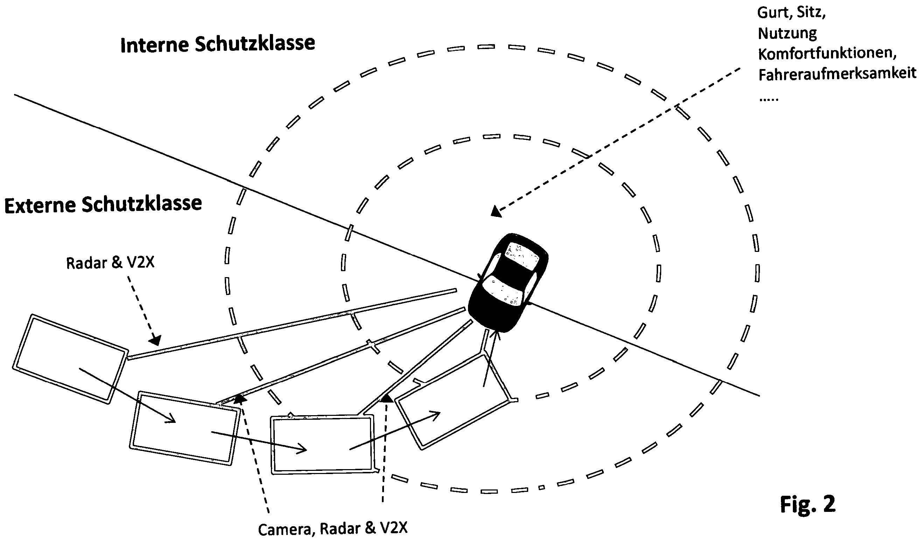

## Patentansprüche

1. Verfahren zum Betrieb eines Kraftfahrzeugs mit einem Insassenschutzsystem sowie Komfortkomponenten und
- mit zumindest einem Insassenerfassungsmittel zum Erkennen einer Insassensituation,
- mit zumindest einem Umfelderfassungsmittel zum Erkennen einer Umfeldsituation und
- mit zumindest einem Fahrzustandserfassungsmittel zum Erkennen einer Fahrzustandssituation,
wobei das Insassenschutzsystem in Abhängigkeit einer erkannten Situation, insbesondere Gefahrensituation, angepasst wird, **dadurch gekennzeichnet, dass**
a) aus zumindest einem Teil der Signale der Umfelderfassungsmittel und Fahrzustandserfassungsmittel einerseits anhand von vorgegebenen Bedingungen eine aus mehreren vorgegebenen externen Schutz- bzw. Gefahrenklassen abgeleitet wird,
b) aus zumindest einem Teil der Signale der Insassenerfassungsmittel und Fahrzustandserfassungsmittel andererseits anhand von vorgegebenen Bedingungen eine aus mehreren vorgegebenen internen Schutz- bzw. Gefahrenklassen abgeleitet wird,
c) der Betrieb des Kraftfahrzeugs anhand der aktuellen internen Schutz- bzw. Gefahrenklasse als auch der aktuellen externen Schutz- bzw. Gefahrenklasse so angepasst wird, dass ein vorgegebenes Gesamtmaß aus interner Schutz- bzw. Gefahrenklasse und externer Schutz- bzw. Gefahrenklasse eingehalten wird,
d) nur bei Vorliegen einer hohen externen Schutzklasse bzw. niedrigen Gefahrenklasse eine entsprechende geringere interne Schutzklasse bzw. höhere Gefahrenklasse zugelassen wird,
e) bei Vorliegen einer hohen internen Schutzklasse bzw. niedrigen Gefahrenklasse eine entsprechende geringere externe Schutzklasse bzw. höhere Gefahrenklasse zugelassen wird.

2. Verfahren nach Anspruch 1, **dadurch gekennzeichnet, dass** in die externe Schutz- bzw. Gefahrenklasse zumindest einer der folgenden Parameter eingeht:
- Abstand, Geschwindigkeit und Richtung anderer Verkehrsteilnehmer
- Straßenzustand und Witterungssituation
- Verkehrsinformation durch andere Fahrzeuge und/oder Verkehrs-Infrastruktureinrichtungen
- Dynamikinformationen anderer Verkehrsteilnehmer
- Aktualität der Verkehrs- und Streckendaten
- Bauliche Trennung zum Gegenverkehr
- Bewertung der eigenen Sensordatengüte
- Anzahl an externen Datengebern im weiteren Streckenverlauf

3. Verfahren nach Anspruch 1 oder 2, **dadurch gekennzeichnet, dass** in die interne Schutz- bzw. Gefahrenklasse zumindest einer der folgenden Parameter eingeht:
- Sitzbelegung und Sitzposition
- Anschnallzustand
- Zustand der Rückhaltesysteme
- Benutzung von Komfortfunktionen
- eigener Fahrzeugzustand und mögliche Fehlfunktionen des Systems
- eigene Dynamikinformationen
- Informationen über das Aktivitätslevel und Aufmerksamkeitslevel des Fahrers und ggf. der Insassen
- Aktivität von Peripheriesystemen welche die Aufmerksamkeit des Fahrers beeinflussen können
- Befindlichkeit von beweglichen Gegenständen im Fahrzeuginnenraum
- Zustand der Insassen

4. Verfahren nach Anspruch 1, **dadurch gekennzeichnet, dass** bei Verlassen der hohen externen Schutzklasse bzw. niedrigen Gefahrenklasse
a) der Fahrer zum Erreichen einer höheren internen Schutzklasse bzw. niedrigeren Gefahrenklasse aufgefordert oder/und
b) die Benutzung bestimmter Komfortfunktionen und/oder Freiheitsgrade eingeschränkt oder/und
c) eine vorgesehene Maßnahme zum Erreichen einer höheren internen Schutzklasse bzw. niedrigeren Gefahrenklasse automatisch durchgeführt wird.

5. Verfahren nach einem der vorangehenden Ansprüche, **dadurch gekennzeichnet, dass** bei Fahrt guter Erkennungssicherheit für Umfeldsensoren und ohne andere Verkehrsteilnehmer im kritischen Fahrzeugumfeld und Verfügbarkeit von Verkehrsinformationen durch andere Fahrzeuge und/oder Verkehrsinfrastruktur-Einrichtungen eine hohe externe Schutzklasse bzw. geringe externe Gefahrenklasse angenommen wird und
in dieser eine niedrige interne Schutzklasse bzw. hohe Gefahrenklasse gefordert wird und die Insassen des Fahrzeugs zumindest einen Sitz im Fahrzeug in eine Komfortposition bringen und/oder die Rückhalteeinrichtungen lockern, vorzugsweise bis hin zum Abschnallen falls dies im rechtlichen Rahmen liegt, und/oder visuelle Medien aktivieren können und bei Verlassen dieser hohen externen Schutzklasse bzw. geringen Gefahrenklasse die Insassen gewarnt und aufgefordert werden, wieder eine höhere interne Schutzklasse bzw. geringere Gefahrenklasse einzunehmen und/oder zumindest Teile der Komfortfunktionen deaktiviert bzw. in einen für eine höhere interne Schutzklasse geeignete Betriebssituation überführt und/oder entsprechende Maßnahmen automatisch durchgeführt werden.

6. Steuergerät mit Mitteln zur Durchführung des Verfahrens nach einem der vorangehenden Ansprüche, wobei das Steuergerät einen Speicher umfasst, und wobei der Speicher ein Steuerprogramm zum Durchführen des Verfahrens enthält.

7. Kraftfahrzeug mit einem Steuergerät nach Anspruch 6 sowie mit einem Insassenschutzsystem sowie Komfortkomponenten und
mit zumindest einem Insassenerfassungsmittel zum Erkennen der Insassensituation,
mit zumindest einem Umfelderfassungsmittel zum Erkennen der Umfeldsituation und
mit zumindest einem Fahrzustandserfassungsmittel zum Erkennen der Fahrzustandssituation.

## Claims

1. A method for operating a motor vehicle having an occupant protection system and comfort components, and
- having at least one occupant detection means for recognizing the occupant situation,
- having at least one surroundings detection means for recognizing the surrounding situation, and
- having at least one driving state detection means for recognizing the driving state situation,
wherein the occupant protection system is adapted depending on the identified situation, in particular the hazard situation, **characterized in that**
a) one of several predefined external protection or hazard classes is derived from at least a portion of the signals of the surroundings detection means and driving state detection means, on the one hand, on the basis of predefined conditions,
b) one of several predefined internal protection or hazard classes is derived from at least a portion of the signals of the occupant detection means and driving state detection means, on the other hand, on the basis of predefined conditions,
c) the operation of the motor vehicle is adapted on the basis of the current internal protection or hazard class and the current external protection or hazard class such that a predefined overall measure of internal protection or hazard class and external protection or hazard class is complied with,
d) a corresponding low internal protection class or higher hazard class is only permitted in the event of a high external protection class or a low hazard class,
e) a corresponding lower external protection class or higher hazard class is permitted in the event of a high internal protection class or low hazard class.

2. The method according to Claim 1, **characterized in that** at least one of the following parameters is included in the external protection or hazard class:
- distance, speed and direction of other road users,
- state of road and weather situation,
- traffic information provided by other vehicles and/or traffic infrastructure facilities,
- dynamic information of other road users,
- up-to-dateness of the traffic and route data,
- structural separation from oncoming traffic,
- evaluation of own sensor data quality,
- number of external data providers in the further course of the route.

3. The method according to Claim 1 or 2, **characterized in that** at least one of the following parameters is included in the internal protection or hazard class:
- seat occupancy and seating position,
- seatbelt state,
- state of the restraint systems,
- use of comfort functions,
- own vehicle state and possible malfunctions of the system,
- own dynamic information,
- information about the level of activity and level of attention of the driver and, if applicable, of the occupants,
- activity of peripheral systems which may influence the attention of the driver,
- condition of movable objects in the passenger compartment,
- state of the occupants.

4. The method according to Claim 1, **characterized in that** on leaving the high external protection class or low hazard class
a) the driver is prompted to achieve a higher internal protection class or lower hazard class, and/or
b) the use of certain comfort functions and/or degrees of freedom is/are restricted, and/or
c) a planned measure to achieve a higher internal protection class or lower hazard class is automatically carried out.

5. The method according to any one of the preceding claims, **characterized in that** a high external protection class or low external hazard class is assumed during driving having good recognition reliability for surroundings sensors and without other road users in the critical vehicle surroundings and availability of traffic information thanks to other vehicles and/or traffic infrastructure facilities, and
a low internal protection class or high hazard class is required during this and the occupants of the vehicle can move at least one seat in the vehicle into a comfort position and/or loosen the restraint facilities, preferably right up to unbuckling seatbelts if this is permitted by law, and/or can activate visual media and, on leaving this high external protection class or low hazard class, the occupants are warned and prompted to take up a higher internal protection class or lower hazard class again and/or at least portions of the comfort functions are deactivated or are transferred into an operating situation which is suitable for a higher internal protection class and/or corresponding measures are automatically carried out.

6. A control device having means for carrying out the method according to any one of the preceding claims, wherein the control device comprises a memory, and wherein the memory includes a control program for carrying out the method.

7. A motor vehicle having a control device according to Claim 6 and having an occupant protection system and comfort components, and
having at least one occupant detection means for recognizing the occupant situation, having at least one surroundings detection means for recognizing the surrounding situation, and having at least one driving state detection means for recognizing the driving state situation.

## Revendications

1. Procédé pour faire fonctionner un véhicule automobile avec un système de protection des occupants ainsi que des éléments de confort et
- avec au moins un moyen de détection d'occupants pour la reconnaissance d'une situation relative aux occupants et
- avec au moins un moyen de détection d'environnement pour la reconnaissance d'une situation relative à l'environnement et
- avec au moins un moyen de détection d'état de conduite pour la reconnaissance d'une situation relative à l'état de conduite,
le système de protection des occupants étant ajusté en fonction d'une situation reconnue, en particulier d'une situation de danger, **caractérisé en ce que**
a) une classe parmi plusieurs classes de protection ou de danger externes spécifiées est dérivée à l'aide de conditions spécifiées à partir d'au moins une partie des signaux des moyens de détection d'environnement et des moyens de détection d'état de conduite, d'une part,
b) une classe parmi plusieurs classes de protection ou de danger internes spécifiées est dérivée à l'aide de conditions spécifiées à partir d'au moins une partie des signaux des moyens de détection d'occupants et des moyens de détection d'état de conduite, d'autre part,
c) le fonctionnement du véhicule automobile est ajusté à l'aide de de la classe de protection ou de danger interne actuelle et également de la classe de protection ou de danger externe actuelle de telle sorte qu'une norme globale spécifiée composée de la classe de protection ou de danger interne et de la classe de protection ou de danger externe est respectée,
d) une classe de protection interne plus basse ou une classe de danger plus élevée correspondantes n'étant autorisées qu'en présence d'une classe de protection externe élevée ou d'une classe de danger basse,
e) une classe de protection externe plus basse ou une classe de danger plus élevée correspondantes étant autorisées en présence d'une classe de protection interne élevée ou d'une classe de danger basse.

2. Procédé selon la revendication 1, **caractérisé en ce que** la classe de protection ou de danger externe est basée sur au moins un des paramètres suivants :
- distance, vitesse et direction d'autres usagers de la route
- état de la route et conditions climatiques
- informations de trafic par d'autres véhicules et/ou des équipements d'infrastructure routière
- informations de dynamique d'autres usagers de la route
- actualité des données de trafic et de trajet
- élément construit séparant les deux sens du trafic
- évaluation de la qualité propre des données de capteurs
- nombre de fournisseurs de données externes sur le reste du trajet

3. Procédé selon la revendication 1 ou 2, **caractérisé en ce que** la classe de protection ou de danger interne est basée sur au moins un des paramètres suivants :
- occupation des sièges et position des sièges
- état d'attachement des ceintures de sécurité
- état des systèmes de retenue
- utilisation des fonctions de confort
- état propre du véhicule et défaillances éventuelles du système
- informations de dynamique propres
- informations sur le niveau d'activité et le niveau d'attention du conducteur et, le cas échéant, des occupants
- activité des systèmes périphériques pouvant influencer l'attention du conducteur
- état d'objets mobiles dans l'habitacle du véhicule
- état des occupants

4. Procédé selon la revendication 1, **caractérisé en ce que**, lorsque la classe de protection externe élevée ou la classe de danger basse est quittée,
a) il est demandé au conducteur d'atteindre une classe de protection interne plus élevée ou une classe de danger plus basse et/ou
b) l'utilisation de certaines fonctions de confort et/ou le degré de liberté sont restreints et/ou
c) une mesure prévue pour atteindre une classe de protection interne plus élevée ou une classe de danger plus basse est exécutée automatiquement.

5. Procédé selon l'une des revendications précédentes, **caractérisé en ce qu'**une classe de protection externe élevée ou une classe de danger externe basse sont adoptées pendant la conduite avec bonne sûreté de reconnaissance pour les capteurs d'environnement et sans autres usagers de la route dans l'environnement critique du véhicule et avec disponibilité d'informations de trafic par d'autres véhicules et/ou des équipements d'infrastructure routière et
dans cette situation, une classe de protection interne basse ou une classe de danger élevée est demandée et les occupants du véhicule peuvent mettre au moins un siège dans le véhicule en position de confort et/ou desserrer les dispositifs de retenue, de préférence jusqu'au détachement des ceintures de sécurité, pour autant que cela est réglementaire, et/ou activer des médias visuels et, lorsque cette classe de protection externe élevée ou classe de danger basse sont quittées, les occupants sont avertis et invités à adopter une classe de protection interne plus élevée ou une classe de danger plus basse et/ou au moins des parties des fonctions de confort sont désactivées ou transférées dans une situation de fonctionnement conforme à une classe de protection interne plus élevée et/ou des mesures correspondantes sont exécutées automatiquement.

6. Appareil de commande avec des moyens pour l'exécution du procédé selon l'une des revendications précédentes, l'appareil de commande comprenant une mémoire, et la mémoire contenant un programme de commande pour l'exécution du procédé.

7. Véhicule automobile avec un appareil de commande selon la revendication 6 ainsi qu'avec un système de protection des occupants ainsi que des éléments de confort et
avec au moins un moyen de détection d'occupants pour la reconnaissance d'une situation relative aux occupants,
avec au moins un moyen de détection d'environnement pour la reconnaissance de la situation relative à l'environnement et
avec au moins un moyen de détection d'état de conduite pour la reconnaissance de la situation relative à l'état de conduite.
